Europäisches Patentamt

European Patent Office

Office européen des brevets

(11) Publication number: **0 507 482 A2**

# EUROPEAN PATENT APPLICATION

(21) Application number: **92302479.8**

(22) Date of filing: **23.03.92**

(51) Int. Cl.5: **H04M 19/04**

(30) Priority: **04.04.91 FI 911626**

(43) Date of publication of application:
**07.10.92 Bulletin 92/41**

(84) Designated Contracting States:
**DE FR GB SE**

(71) Applicant: **NOKIA MOBILE PHONES LTD.**
**P.O. Box 86**
**SF-24101 Salo(FI)**

(72) Inventor: **Suominen, Timo**
**Vuorikuja 4 as. 23**
**SF-24100 Salo(FI)**

(74) Representative: **Frain, Timothy John**
**Technophone Limited Intellectual Property**
**Manager Ashwood House Pembroke**
**Broadway**
**Camberley, Surrey GU15 3SP(GB)**

(54) **Telephone ring generator with automatic volume control according to the ambient noise level.**

(57) A telephone, for example a cellular radio telephone, is provided with means for generating a ringing tone upon detection of an incoming call, the volume of the ringing tone being controlled depending on the level of ambient noise to ensure that the ringing tone volume is sufficient to be heard above the ambient noise while not being too loud to startle. This is achieved by using the telephone's microphone (1) to detect the ambient noise level, comparing this with reference values stored in the memory of the telephone's microprocessor (6) and providing a control signal to the telephone's loudspeaker (8) to produce a ringing tone of a suitable volume.

Fig. 1

The invention relates to a telephone comprising means for generating a ringing tone upon detection of an incoming call, and means for controlling the volume of the ringing tone.

Current telephones, in particular cellular radio telephones, generally have the possibility of controlling the volume of the ringing tone which is generated when there is an incoming call so that it can be adjusted to be discernible above the noise level of the environment. In order to have the ringing tone reliably noticed, the ringing tone volume, in some cases, is arranged to increase at each ringing tone period so that the initial ring can be adjusted to a fixed level, and whereby the control logic of the telephone increases the volume level of subsequent rings.

In practice this kind of sound level control is not appropriate in all instances. For example, when a telephone is used in a car, if the initial level of the ringing sound is chosen high so as to be audible over the engine noise when the car is being driven hard then the ringing sound will probably be intrusive, even on the initial ring, when the car engine is idling. On the other hand, if the initial volume level is set low, it may take too long, from the system point of view, before the user will notice that the telephone is ringing in a noisy environment. At worst there might be not time to answer the call.

In another example, where a handheld cellular radio telephone or a pocket`phone is carried in a silent environment, a loud ringing sound may give rise to awkward situations when it may startle other persons in addition to the person carrying the telephone.

The present invention aims to solve this problem by providing a telephone which further comprises, means for detecting the level of ambient noise signal and for producing a detection signal in response thereto, and wherein the ringing tone volume controlling means is operable, in response to the control signal, to vary the ringing tone volume. This has the advantage that there is generated a telephone ringing tone, whose volume is adjusted essentially to the noise level of the environment, so that the ringing sound at a given time is sufficiently strong to indicate an incoming call to the user, but sufficiently silent so that it will not cause a disturbance.

Preferably the ambient noise level is measured before the ringing sound is triggered. This has the advantage that the level of the ringing sound is directly related to the noise level of the environment.

The invention will be described, by way of example only, with reference to the accompanying drawings, of which:

Fig. 1 is a block diagram of a circuit embodying the invention, and

Fig. 2 is a circuit diagram corresponding to blocks 2 to 5 of Figure 1.

A cellular radio telephone typically comprises a transceiver coupled to an external antenna and all the other functions conventionally found in a mobile cellular telephone. Since these aspects of the telephone are not directly relevant to the instant invention no further details will be given here, except to say that a microprocessor is employed to control all the basic functions of the telephone.

As is also conventional, the telephone comprises an earpiece including a speaker, and a mouthpiece including a microphone.

The strength of an ambient noise signal input via a microphone 1, for example the microphone of the telephone mouthpiece, which has been amplified in an amplifier 2, and filtered in a filter 3 is detected in the demodulator (or detection circuit) 4. Upon further filtering in a low-pass filter 5, a detection signal from the demodulator 4, having a value representing the measured ambient noise signal strength, is supplied via an analog to digital converter (ADC) (not shown), to the telephone's control logic, which in present car and mobile telephones usually is a microprocessor 6 provided with a memory as discussed above. The processor 6 compares the obtained environmental sound or noise level i.e the ambient noise signal strength as represented by the detection signal, with reference values stored in a table in the memory. For each reference value, an empirically obtained suitable control signal value is also stored into the memory. The part of the microprocessor 6 controlling the ringing tone volume supplies a control signal having a value obtained from the table in the memory, via an amplifier 7 to a loudspeaker or buzzer 8 to trigger a ringing tone of a volume suitably adapted to the environment. The loudspeaker 8 may be the loudspeaker of the telephone earpiece.

The filter 3 may be a so called sofometric filter having a frequency range of about 300-4000 Hz.

Several samples can be taken of the detection signal and an average value generated from them, so that it is possible to prevent inappropriate ringing tone volumes being generated due to occasional transient sound peaks or silent moments in the environment.

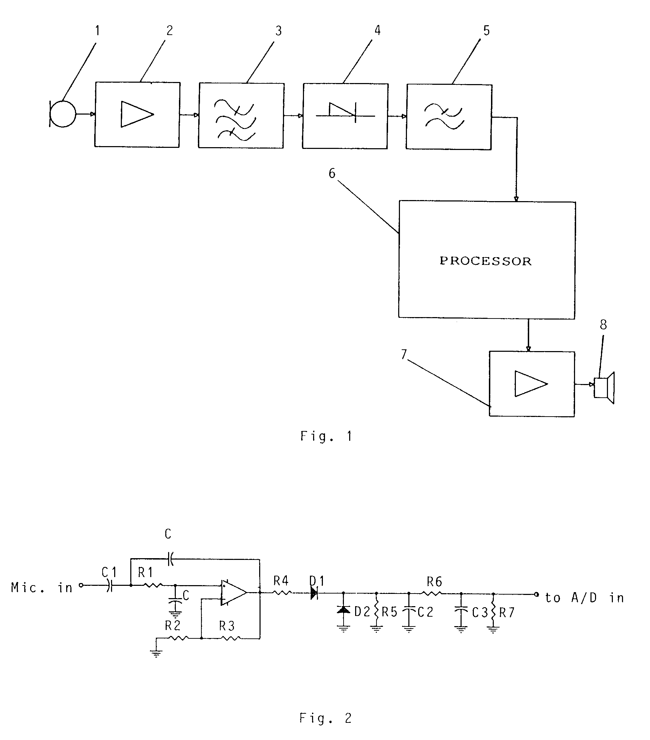

As shown in Fig. 2, the amplifier 2 and the filter 3 are constituted by an operational amplifier and the input branch and feedback loops thereof. The demodulator 4 is simply a pair of diodes D1 and D2 and the low pass filter 5 is constituted by resistors R5, R6 and R7 and capacitors C2, C3.

The ambient noise level is measured at least when a new call is received by the telephone, before the first ringing sound is triggered.

Typical component values are:-

C1,C2 and C3
= 0.1μF
C
= 270pF
R1
= 82kΩ
R2 and R3
= 47kΩ
R4
= 10kΩ
R5 and R7
= 220kΩ
R6
= 100kΩ

Diodes D1 and D2 can be any diode for example 1N 4148.

Alternatively it is possible to perform the measurement before each ringing tone, or at the beginning of each ringing tone period before the ringing tone is generated. The length of the ringing tone period generally varies between 3 and 7 seconds, and before the call is answered there may be 3 to 10 rings, covering a time period of even more than 30 seconds.

It is a preferred practice to control the volume level of each ringing tone individually when the telephone is used in an environment where the ambient noise level can vary considerably during a relatively short period of time.

In some cases mobile telephones are used in environmental conditions in which the ambient noise levels are very difficult to assess. As an example of this is a pocket telephone which is alternately kept on the table and in the pocket. In this case, it is preferable to arrange a measurement of the ambient noise level during an idle state, say at regular intervals, i.e. the ambient noise level is measured when the telephone is in the idle state, waiting for an incoming call. The volume level of the ambient noise in the idle state is stored as an idle state noise value in the memory of the microprocessor 6. It is then possible to modify the control signal value with this idle state noise value or with the average value of several idle state noise values. In this way it is possible to better take into account the average noise level of the environment and to adjust the ringing sound to the environment.

In view of the foregoing description it will be obvious to a person skilled in the art that various modifications may be made within the scope of the present invention.

## Claims

1. A telephone comprising means for generating a ringing tone upon detection of an incoming call, and means for controlling the volume of the ringing tone, characterised in that the telephone further comprises means for detecting the level of ambient noise and for producing a control signal in response thereto, and in that the ringing tone volume controlling means is operable, in response to the control signal, to vary the ringing tone volume.

2. A telephone according to claim 1 characterised in that the detecting means includes means for producing a detection signal in accordance with the detected ambient noise level, and in that the volume controlling means comprises a memory, and is operable to compare the value of the detection signal with a reference value stored in the memory and to produce the control signal having a value selected in response to said comparison.

3. A telephone according to a claim 2 wherein the detection signal is filtered.

4. A telephone according to claim 2 or claim 3 wherein the detection signal is averaged over a plurality of detection samples.

5. A telephone according to any preceding claim wherein the volume control means is operable to generate the control signal at the beginning of each incoming call before the ringing tone is generated.

6. A telephone according to any of claims 1 to 4 wherein the volume control means is operable to generate a control signal at the beginning of each ringing tone period before the ringing tone is generated.

7. A telephone according to any of claims 2 to 6 wherein the volume control means is operable to generate the control signal when the telephone is in the idle state.

8. A telephone according to claim 7 wherein the volume control means is operable to store the value of the detection signal in the memory.

9. A telephone according to claim 8 wherein the volume control means is operable to generate a control signal in accordance with the last stored idle state detection signal values.

10. A telephone according to claim 8 wherein the volume control means is operable to generate a control signal in accordance with the average of a plurality of stored idle state detection signal values.

Fig. 1

Fig. 2